# EUROPÄISCHE PATENTANMELDUNG

(11) **EP 1 688 337 A2**
(43) Veröffentlichungstag der Anmeldung: **09.08.2006**
(21) Anmeldenummer: 06002272.0
(22) Anmeldetag: 03.02.2006
(51) Int. Cl.: B62B 13/16

(54) **Klappschlitten**

(30) Priorität: 05.02.2005 DE 102005005421
(71) Anmelder: Scheib, Rudi, 89081 Ulm (DE)
(72) Erfinder: Scheib, Rudi, 89081 Ulm (DE)
(74) Vertreter: Koepe, Gerd L.

(57) **Zusammenfassung**

Die Erfindung betrifft einen Klappschlitten (1) mit zwei seitlichen, jeweils eine Kufe (2), eine Sitzleiste (3) und gegebenenfalls eine oder mehrere Stütze(n) (4a) umfassenden Schlittenrahmen (4), die durch einen Sitz (5) und zwei Querstreben (6) miteinander verbunden sind, wobei die beiden Querstreben (6) als Scharnier ausgebildet sind und in ihrer Mitte mindestens eine Scharnierachse (9a) aufweisen, deren Drehlage(n) im aufgeklappten Zustand des Schlittens (1) arretierbar ist/sind und wobei die Querstreben (6) an ihren seitlichen Enden um je eine rechte Drehachse (7) und je eine linke Drehachse (8) drehbar mit den Schlittenrahmen (4) verbunden sind, wobei die einer Querstrebe (6) zugehörige rechte Drehachse (7) und linke Drehachse (8) in einer Ebene liegen und die Scharnierachse(n) (9a) in einer gleichen Ebene vor, auf oder hinter der erstgenannten Ebene liegt/liegen, wobei im aufgeklappten Zustand des Schlittens (1) die Drehlage mindestens einer der Drehachsen (7, 8) jeder Querstrebe (6) durch mindestens einen Anschlag (10, 11, 12, 13, 14) an den seitlichen Enden mindestens einer der Querstreben (6) oder an mindestens einem der Schlittenrahmen (4) oder an mindestens einer der Drehachsen (7, 8) oder an einem Lager mindestens einer der Drehachsen (7, 8) begrenzt ist und/oder die Drehlage mindestens einer der Drehachsen (7, 8) jeder Querstrebe (6) durch mindestens eine Arretiervorrichtung (20, 21, 22, 23, ...) kraftschlüssig arretiert ist.

## Beschreibung

Erfindung betrifft einen Klappschlitten des bekannten Typs mit zwei seitlichen, jeweils eine Kufe, eine Sitzleiste und gegebenenfalls eine oder mehrere Stützen umfassenden Schlittenrahmen, die durch einen Sitz und zwei Querstreben miteinander verbunden sind. Die beiden Querstreben sind als Scharnier ausgebildet und weisen in ihrer Mitte eine Scharnierachse auf, deren Drehlage im aufgeklappten Zustand des Schlittens arretiert werden kann. An ihren seitlichen Enden sind sie um je eine rechte Drehachse und um je eine linke Drehachse drehbar mit den Schlittenrahmen verbunden. Dabei liegen die einer Querstrebe zugehörige rechte und linke Drehachse in einer Ebene und liegt die Scharnierachse in einer gleichen Ebene vor-oder hinter der erstgenannten Ebene. Weiter verlaufen die jeweils einem Schlittenrahmen zugeordneten vorderen und hinteren Drehachsen parallel oder in einem bestimmten Winkel zueinander, beispielsweise in einem Winkel von < 40 °.

Klappschlitten sind aus dem Stand der Technik seit langem bekannt und bei den Benutzern beliebt, da die Klappschlitten Platz sowohl beim Transport als auch bei der Aufbewahrung sparen. Ein Klappschlitten der eingangs genannten Art ist in der Druckschrift US-A 1 070 915 beschrieben, weist in der Handhabung jedoch Nachteile auf: Die für den Einsatz erforderliche Stabilität dieses Klappschlittens kann nur durch Versteifungsstreben, die diagonal unter der Sitzfläche verlaufend die beiden Schlittenrahmen miteinander verbinden, geschaffen werden. Nur so kann verhindert werden, daß die beiden über die zwei Querstreben und Drehachsen verbundenen Schlittenrahmen nach Art eines Parallelogramms relativ zueinander verschoben werden können. Zum Zusammenklappen des Klappschlittens muss die Verbindung der Diagonalstreben mit den Schlittenrahmen gelöst und für den Gebrauch des Klappschlittens wieder hergestellt werden. Dies ist nachteilig für die Handhabung. Zudem wird durch die zwingend erforderlichen Diagonalstreben die Herstellung des Klappschlittens verteuert.

In der früheren deutschen Patentanmeldung Nr. 103 31 991.3 des Anmelders (Anmeldetag: 14. Juli 2003; Bezeichnung: Klappschlitten), wird ein Klappschlitten der eingangs genannten Art vorgeschlagen, bei dem die beiden einem Schlittenrahmen zugeordneten vorderen und hinteren Drehachsen nicht parallel zueinander orientiert sind, sondern in der Ebene des Schlittens in einem Winkel > 40 ° geneigt zueinander verlaufen. Dadurch wird beim Gebrauch des Klappschlittens im aufgeklappten Zustand die parallele Verschiebung der beiden Schlittenrahmen unmöglich.

Der vorliegenden Erfindung lag die Aufgabe zugrunde, einen Klappschlitten der eingangs genannten Art so auszubilden, daß dessen für den Gebrauch erforderliche Stabilität im aufgeklappten Zustand auch ohne weitere Versteifungsstreben bei einer in der Ebene des Schlittens parallelen Anordnung der vorderen und hinteren Drehachse (wie in der Druckschrift US-A 1,070,915 beschrieben) und auch bei einer in der Ebene des Schlittenrahmens nicht parallelen Anordnung der vorderen und hinteren Drehachse (wie in der älteren Anmeldung Nr. 103 31 991.3 beschrieben) erreicht wird.

Die Aufgabe wird nach der Erfindung bei einem Klappschlitten der eingangs genannten Art dadurch gelöst, daß im aufgeklappten gebrauchsfertigen Zustand des Schlittens die Drehlage mindestens einer der Drehachsen jeder Querstrebe durch mindestens einen Anschlag an den seitlichen Enden mindestens einer der Querstreben und vorzugsweise an beiden Querstreben oder an mindestens einem der Schlittenrahmen oder an mindestens einer der Drehachsen oder an einem Lager mindestens einer der Drehachsen begrenzt ist und/oder die Drehlage mindestens einer der Drehachsen jeder Querstrebe durch mindestens eine Arretiervorrichtung kraftschlüssig arretiert ist.

Die Erfindung betrifft daher einen Klappschlitten mit zwei seitlichen, jeweils eine Kufe, eine Sitzleiste und gegebenenfalls eine oder mehrere Stütze(n) umfassenden Schlittenrahmen, die durch einen Sitz und zwei Querstreben miteinander verbunden sind, wobei die beiden Querstreben als Scharnier ausgebildet sind und in ihrer Mitte mindestens eine Scharnierachse aufweisen, deren Drehlage(n) im aufgeklappten Zustand des Schlittens arretierbar ist/sind und wobei die Querstreben an ihren seitlichen Enden um je eine rechte Drehachse und je eine linke Drehachse drehbar mit den Schlittenrahmen verbunden sind, wobei die einer Querstrebe zugehörige rechte Drehachse und linke Drehachse in einer Ebene liegen und die Scharnierachse(n) in einer gleichen Ebene vor, auf oder hinter der erstgenannten Ebene liegt/liegen, wobei im aufgeklappten Zustand des Schlittens die Drehlage mindestens einer der Drehachsen jeder Querstrebe durch mindestens einen Anschlag an den seitlichen Enden mindestens einer der Querstreben oder an mindestens einem der Schlittenrahmen oder an mindestens einer der Drehachsen oder an einem Lager mindestens einer der Drehachsen begrenzt ist und/oder die Drehlage mindestens einer der Drehachsen jeder Querstrebe durch mindestens eine Arretiervorrichtung kraftschlüssig arretiert ist.

Bevorzugte Ausführungsformen des erfindungsgemäßen Klappschlittens ergeben sich aus den Unteransprüchen 2 bis 9.

Die Erfindung wird nun nachfolgend unter Bezugnahme auf die Figuren näher erläutert. Diese zeigen bevorzugte Ausgestaltungen und Ausführungsformen der Erfindung, die jedoch die Erfindung nicht beschränken, sondern nur beispielhaft erläutern. Es zeigen:
Figur 1 eine seitliche Ansicht eines erfindungsgemäßen Klappschlittens im zusammengeklappten Zustand;
Figur 2 eine Ansicht eines erfindungsgemäßen Klappschlittens von oben;
Figur 3 eine schematische Ansicht einer Querstrebe eines erfindungsgemäßen Klappschlittens von oben: Figur 3a zeigt den zusammengeklappten, Figur 3b den teilweise aufgeklappten und Figur 3c den aufgeklappten, gebrauchsfertigen Zustand;
Figur 4 eine schematische Ansicht einer weiteren Ausführungsform einer Querstrebe eines erfindungsgemäßen Klappschlittens von oben: Figur 4a zeigt den zusammengeklappten, Figur 4b den teilweise aufgeklappten und Figur 4c den aufgeklappten, gebrauchsfertigen Zustand;
Figur 5 eine schematische Ansicht einer weiteren Ausführungsform einer Querstrebe eines erfindungsgemäßen Klappschlittens von oben: Figur 5a zeigt den zusammengeklappten, Figur 5b den teilweise aufgeklappten und Figur 5c den aufgeklappten, gebrauchsfertigen Zustand;
Figur 6 eine schematische Ansicht einer weiteren Ausführungsform einer Querstrebe eines erfindungsgemäßen Klappschlittens von oben: Figur 6a zeigt den zusammengeklappten, Figur 6b den teilweise aufgeklappten und Figur 6c den aufgeklappten, gebrauchsfertigen Zustand;
Figur 7 zeigt eine Ansicht des erfindungsgemäßen Klappschlittens von hinten;
Figur 8 zeigt eine der Ansicht von Figur 2 ähnliche Ansicht einer weiteren Ausführungsform eines erfindungsgemäßen Klappschlittens von oben;
Figur 9 zeigt eine der Ansicht von Figur 1 ähnliche seitliche Ansicht einer weiteren Ausführungsform eines erfindungsgemäßen Klappschlittens;
Figur 10 zeigt eine Ansicht einer weiteren Ausführungsform eines erfindungsgemäßen Klappschlittens von hinten; und
Figur 11 zeigt eine Ansicht eines erfindungsgemäßen Klappschlittens von hinten im zusammengeklappten Zustand.

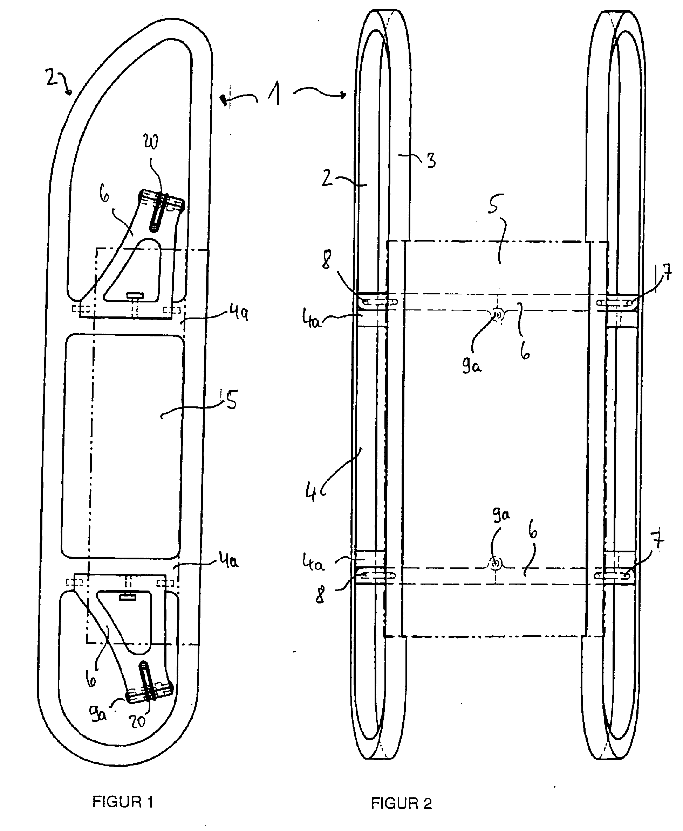

In Figur 1 und Figur 2 dargestellt ist ein Klappschlitten 1, der aus zwei seitlichen, jeweils eine Kufe 2 und eine Sitzleiste 3 und gegebenenfalls eine oder mehrere Stütze(n) 4a umfassenden Schlittenrahmen 4 besteht. Die beiden Schlittenrahmen 4 sind durch einen Sitz 5 und zwei Querstreben 6 miteinander verbunden. Die Querstreben 6 sind jeweils um eine rechte Drehachse 7 und eine linke Drehachse 8 drehbar mit den beiden Schlittenrahmen 4 verbunden und sind jeweils in Form eines Scharniers 9 mit mindestens einer Scharnierachse 9a im wesentlichen in der Mitte ausgebildet, wobei die einer Querstrebe 6 zugehörige rechte Drehachse 7 und derselben Querstrebe 6 zugehörige linke Drehachse 8 in einer Ebene liegen. Die Querstreben 6 können auch in Form eines Mehrfach-Scharniers, beispielsweise eines Doppelscharniers, ausgebildet sein und weisen dann zwei oder mehr Scharnierachsen 9a auf. Darüber hinaus liegt/liegen die Scharnierachse(n) 9a in einer gleichen Ebene vor, auf oder hinter der Ebene, auf der die einer Querstrebe zugehörigen rechten und linken Drehachsen 7, 8 liegen.

Der Begriff "aufgeklappter Schlitten" oder "Klappschlitten im aufgeklappten Zustand" bedeutet im Rahmen der vorliegenden Beschreibung und in den Patentansprüchen, daß sich der Klappschlitten 1 gemäß der Erfindung in einem Zustand befindet, in dem er in Gebrauch genommen, also zum Rodeln verwendet werden kann. In diesem Zustand muß Sicherheit gegen Instabilität oder gar Zusammenklappen garantiert sein. In dem erfindungsgemäßen Klappschlitten befinden sich im aufgeklappten Zustand die Querstreben üblicherweise in einem gestreckten Zustand, d. h. verlaufen in einer Ebene, die im wesentlichen senkrecht zur Fortbewegungs- und Laufrichtung des Schlittens 1 liegt. Der Begriff "aufgeklappt" wird häufig auch synonym zu "betriebsfertig" verwendet.

In einer Ausführungsform der Erfindung ist im aufgeklappten, betriebsfertigen Zustand des erfindungsgemäßen Klappschlittens 1 die Drehlage mindestens einer der Drehachsen 7, 8 jeder Querstrebe durch mindestens einen Anschlag 10, 11, 12, 13, ..., an den beiden seitlichen Enden mindestens einer der Querstreben 6 begrenzt. Unter "Begrenzung" wird im vorgenannten Zusammenhang in der weiteren Beschreibung und in den Patentansprüchen verstanden, daß die Bewegung des Aufklappens des Schlittens vom zusammengeklappten Zustand des Klappschlittens 1 über den teilweise aufgeklappten Zustand des Klappschlittens 1 zum vollständig aufgeklappten Zustand des Klappschlittens 1 am Ende des Aufklapp-Vorgangs an eine Begrenzung in dem Sinne stößt, daß die Bewegung nicht weiter fortgesetzt werden kann. Vielmehr findet sie dadurch einen Abschluß, daß Teile des erfindungsgemäßen Klappschlittens 1, die im zusammengeklappten Zustand oder teilweise aufgeklappten Zustand nicht in Anlage aneinander waren, am Ende der Bewegung des Aufklappens und Herstellens des Betriebszustandes zumindest in einem kleinen Flächenteil zur Anlage aneinander gebracht werden. Das Anliegen einzelner Teile des Schlittens aneinander behindert dann eine weitere Bewegung. Dieser Zustand ist deswegen angestrebt, weil das Anliegen nicht nur Stabilität des Schlittens beim Gebrauch gegen ein Zusammenklappen schafft, sondern auch die zusätzliche - und erfindungsgemäß weiter bevorzugte - Situation schafft, daß der Anlage-Zustand mit geeigneten, nachfolgend im einzelnen beschriebenen Mitteln arretiert werden kann. Dadurch kann zusätzliche Stabilität und in der Folge auch Sicherheit geschaffen werden, was dem Gebrauch des Klappschlittens gemäß der Erfindung zugute kommt.

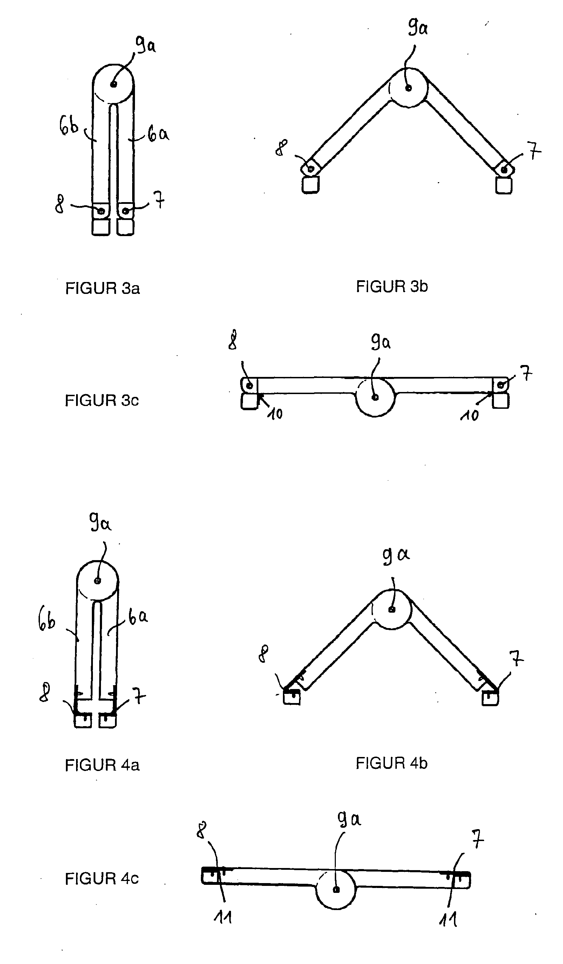

Die Begrenzung der Drehlage der Drehachsen durch einen oder mehrere Anschläge erfolgt erfindungsgemäß zumindest an den beiden seitlichen Enden einer der Querstreben 6, kann jedoch in einer bevorzugten Ausführungsform der Erfindung an den beiden seitlichen Enden beider Querstreben 6 vorgesehen werden. Bevorzugt ist erfindungsgemäß weiter, daß die Drehlagen beider Drehachsen 7, 8 mindestens einer, vorzugsweise beider Querstreben 6 durch Anschläge 10, 11, 12, 13, ... an den seitlichen Enden der Querstrebe(n) 6 begrenzt sind und/oder daß die Drehlagen beider Drehachsen 7, 8 durch Anschläge 10, 11, 12, 13 ... an beiden Schlittenrahmen 4 begrenzt sind. Durch das Vorsehen von Anschlägen an der rechten und linken Seite einer Querstrebe 6 ist die Drehung der rechten Drehachsen 7 einer Querstrebe 6 und der linken Drehachse 8 derselben Querstrebe 6 über einen bestimmten Winkel von im wesentlichen 90 ° hinaus verhindert und blockiert. Der vorgesehene Anschlag kommt an einer korrespondierenden Anschlagsfläche zum Anliegen. Dies kann entweder in der Weise geschehen, daß ein Anschlag an der Querstrebe 6 vorgesehen wird und dieser mit einer Anschlagsfläche an einer Stütze 4a am Schlittenrahmen 4 zum Anliegen kommt oder ein Anschlag an einer Stütze 4a am Schlittenrahmen 4 vorgesehen wird und dieser mit einer Anschlagsfläche an einer Querstrebe 6, insbesondere an deren äußerem, also am nächsten dem Schlittenrahmen 4 benachbarten Ende, zum Anliegen kommt. Dies wird nachfolgend unter Bezugnahme auf die Figuren 3 bis 6 näher erläutert. In den besonders bevorzugten Ausführungsformen des erfindungsgemäßen Klappschlittens 1, in denen an beiden Querstreben 6 die Drehlage der Drehachsen begrenzt ist, finden sich entsprechende Einrichtungen an beiden Querstreben 6.

Die Figuren 3 bis 6 zeigen jeweils eine Querstrebe 6 des erfindungsgemäßen Klappschlittens 1 von oben. Dabei beziehen sich die Figuren 3a, 4a, 5a und 6a auf die Stellung der jeweiligen Querstrebe 6 im zusammengeklappten Zustand des Klappschlittens 1, beziehen sich die Figuren 3b, 4b, 5b und 6b auf die Stellung der jeweiligen Querstrebe 6 im teilweise aufgeklappten Zustand des Klappschlittens 1 und beziehen sich die Figuren 3c, 4c, 5c und 6c auf die Stellung der jeweiligen Querstrebe 6 im vollständige aufgeklappten und damit betriebsfertigen Zustand des Klappschlittens 1.

In Figur 3a sind die beiden Querstreben-Hälften 6a, 6b der von oben dargestellten Querstrebe des Klappschlittens 1 in paralleler Anordnung dargestellt. Die beiden den Drehachsen 7, 8 benachbarten Innenkanten der Querstreben-Hälften 6a, 6b zeigen aufeinander zu. In diesem Zustand bilden die Innenkanten der Stützen 4a des Schlittenrahmens 4 und die Innenkanten der Querstreben-Hälften 6a, 6b, einen Winkel von 0 °. Bei Öffnen des Scharniers durch Schwenken der beiden Querstreben-Hälften 6a, 6b um die Scharnierachse 9a (Figur 3b) öffnet sich der Winkel zwischen den Innenkanten der Stützen 4a und den Innenkanten der Querstreben-Hälften 6a, 6b, bis er im gestreckten Zustand der Querstreben-Hälften 6a, 6b ca. 90 ° erreicht (Figur 3c). In dem in Figur 3c gezeigten Zustand liegen die in Figur 3a aufeinander hin zeigenden Innenkanten der Querstreben-Hälften 6a, 6b an den seitlichen Stützen 4a des Schlittenrahmens 4 an. Die Aufklapp-Bewegung kann wegen der Anordnung der Drehachsen 7, 8 im Verhältnis zu den Stützen 4a nicht über den Winkel von 90 ° hinaus fortgeführt werden. Die Anlage der seitlichen Enden der Querstreben-Hälften an den Stützen 4a des Schlittenrahmens 4 stabilisiert den so erreichten Zustand. In der in den Figuren 3a bis 3c gezeigten Ausführungsform wird also die Begrenzung der Drehlagen der Drehachsen 7, 8 dadurch erreicht, daß im Rahmen des Aufklapp-Vorgangs des Klappschlittens 1 zwei (in diesem Fall über die Drehachsen 7, 8) benachbarte Flächen zur Anlage aneinander kommen, die im zusammengeklappten Zustand des Klappschlittens 1 nicht aneinander anliegend sind.

In der nächsten bevorzugten Ausführungsform der Erfindung, die in Figur 4 gezeigt sind, kommen ebenfalls zwei im zusammengeklappten Zustand des Schlittens 1 benachbarte Flächen zur Anlage aneinander. Figur 4a zeigt die Situation im zusammengeklappten Zustand des Schlittens 1, in dem die beiden Querstreben-Hälften 6a, 6b parallel zueinander verlaufen und ihre beiden Enden über jeweilige an der Außenkante der Querstreben-Hälften angebrachte Anschlags-Elemente 11 mit den seitlichen Stützen 4a der beiden Schlittenrahmen 4 verbunden sind. Beim Aufklappen des Schlittens bewegen sich die Enden der Querstreben-Hälften 6a, 6b auseinander (Figur 4b), bis im aufgeklappten Zustand die Anschlags-Elemente 11 eine Anlage der äußeren Seitenfläche jeder der Querstreben-Hälften 6a, 6b an die Innenseiten der Seitenstützen 4a der Schlittenrahmen 4 erzwingen. Die so erreichte Anlage der aneinander anliegenden Anschlagsflächen stabilisiert die Drehlage der Drehachsen 7, 8 und sichert die Stabilität des Klappschlittens.

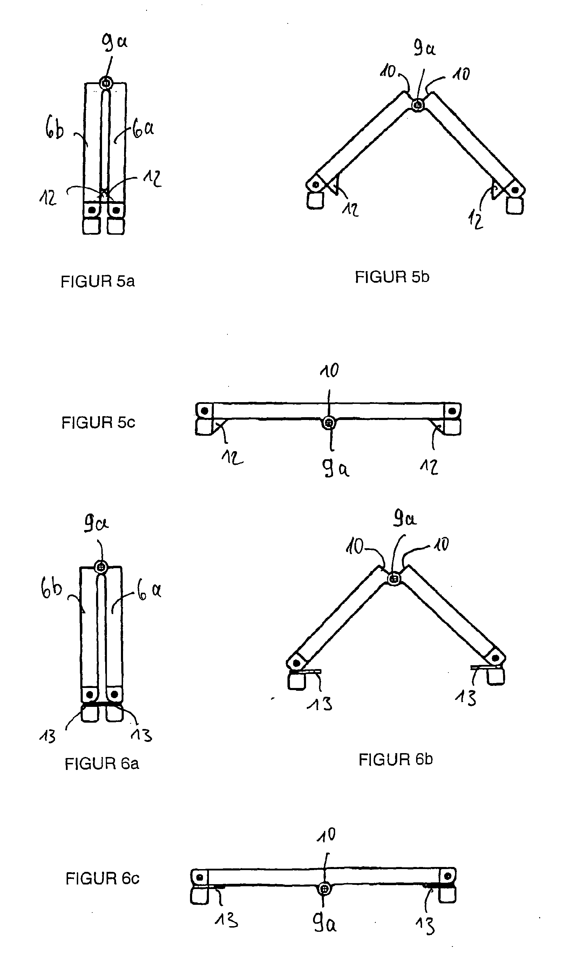

In der in Figur 5 dargestellten, weiter bevorzugten Ausführungsform der Erfindung weisen die beiden Querstreben-Hälften 6a, 6b gesonderte Anschläge 12a, 12b auf, die eine über die bereits in Figur 3 gezeigte Anordnung hinaus eine zusätzliche Stabilisierung bewirken. Beim Auseinanderklappen des Schlittens 1 kommen nicht nur die den Drehachsen 7, 8 benachbarten Flächen der Querstreben-Hälften 6a, 6b in Anlage mit den Flächen der Seitenstützen 4a und kommen nicht nur die mittleren Innenflächen 6c und 6d der Querstreben-Hälften 6a, 6b miteinander in Anlage, sondern kommen die (im vorliegenden Fall beispielhaft) Dreiecksflächen der Anschläge 12 in Anlage mit den Innenflächen der Seitenstützen 4a der Schlittenrahmen 4. Diese Anordnung ist aus Stabilitäts-Sicht besonders vorteilhaft, da an den Seitenstützen 4a zwei stabilisierende Elemente im Winkel von 90 ° anliegen. In einer besonders bevorzugten Ausführungsform sind die beiden (im vorliegenden Fall) Dreiecks-Anschläge 12 an den seitlichen Enden der Querstreben-Hälften 6a, 6b versetzt angeordnet, damit sie beim Zusammenklappen des erfindungsgemäßen Klappschlittens (siehe Figur 5a) das vollständige Zusammenklappen nicht behindern. Selbstversändlich können die Formen der Anschläge 12 von einem Dreieck verschieden sein und
- beispielsweise - Viertelkreis-Form aufweisen; in diesem Fall würde die Basis des Viertelkreises mit der Seitenstützen-Fläche stabilisierend in Anlage kommen.

Eine vergleichbare Ausführungsform zeigt Figur 6: Dort ist jedoch der Anschlag 13 an der jeweiligen Seitenstütze 4a des Schlittenrahmens 4 befestigt und trägt zur besonderen Stabilisierung dadurch bei, daß beim Aufklappen des Schlittens die Querstreben-Hälften 6a, 6b zumindest über einen Teil ihrer den jeweiligen Drehachsen 7, 8 benachbarten Flächen mit dem Anschlag 13 in Anlage kommen (Figur 6c). Diese Begrenzung der Drehlage der Drehachsen 7, 8 stabilisiert den Klappschlitten im aufgeklappten Zustand.

In weiteren bevorzugten Ausführungsformen der Erfindung ist es möglich, Begrenzungen der Drehlagen der Drehachsen 7, 8 jeder Querstrebe dadurch herbeizuführen, daß man Anschläge 14 an mindestens einer und vorzugsweise an beiden Drehachsen 7, 8 einer Querstrebe 16 oder - noch weiter bevorzugt - an beiden Drehachsen 7, 8 beider Querstreben 6 bzw. an den Lagern der jeweiligen Drehachsen vorsieht. Dies kann in einer weiter bevorzugten Ausführungsform in der Weise geschehen, daß die Drehachsen 7, 8 oder ihre Lager Begrenzungen in Form von die Bewegung der Drehachsen 7, 8 blockierenden Stiften bzw. Zapfen in Langlöchern oder in Form von kongruenten Stufen in sich auf der Scharnierachse bewegenden Hülsen aufweisen. In noch weiter bevorzugten Ausführungsformen können die Stifte oder Zapfen in einer Endstellung der Drehlage bei aufgeklapptem Zustand des Klappschlittens 1 einrasten oder die Achse festklemmen oder arretieren und durch die so entstehende kraftschlüssige Verbindung zwischen den Drehachsen und den Querstreben den Schlittenrahmen stabilisieren.

Die vorgenannten Beispiele stellen nur ausgewählte Beispiele aus einer Vielzahl von Möglichkeiten zur Begrenzung der Drehlage(n) der Schlitten-Drehachsen 7, 8 dar und sollen nicht als Beschränkung der Erfindung verstanden werden. Weitere Möglichkeiten zur Begrenzung der Drehlage kann der Fachmann aus einem Verständnis der vorliegenden Erfindung leicht auffinden, und auch diese dem Prinzip der vorliegenden Erfindung folgenden Ausführungsformen werden als unter die vorliegende Erfindung fallend angesehen.

Durch diese überraschend einfache Gestaltung mit mindestens einem Anschlag 10, 11, 12, 13, 14, vorzugsweise mehreren Anschlägen an den Querstreben oder mit diesen zusammenwirkenden Bauteilen des Klappschlittens (wie beispielsweise der seitlichen Stütze 4a) bzw. der Anlage einzelner Teile des Schlittens aneinander unter Begrenzung der Drehung einer seitlichen Drehachse einer Querstrebe oder beider Querstreben wird wirksam verhindert, daß die beiden Schlittenrahmen relativ zueinander in Längsrichtung des Klappschlittens 1 verschoben werden können. Die bei den bekannten Schlitten grundsätzlich mögliche Parallelverschiebung der Schlittenrahmen und der Querstreben ist so wirksam unterbunden.

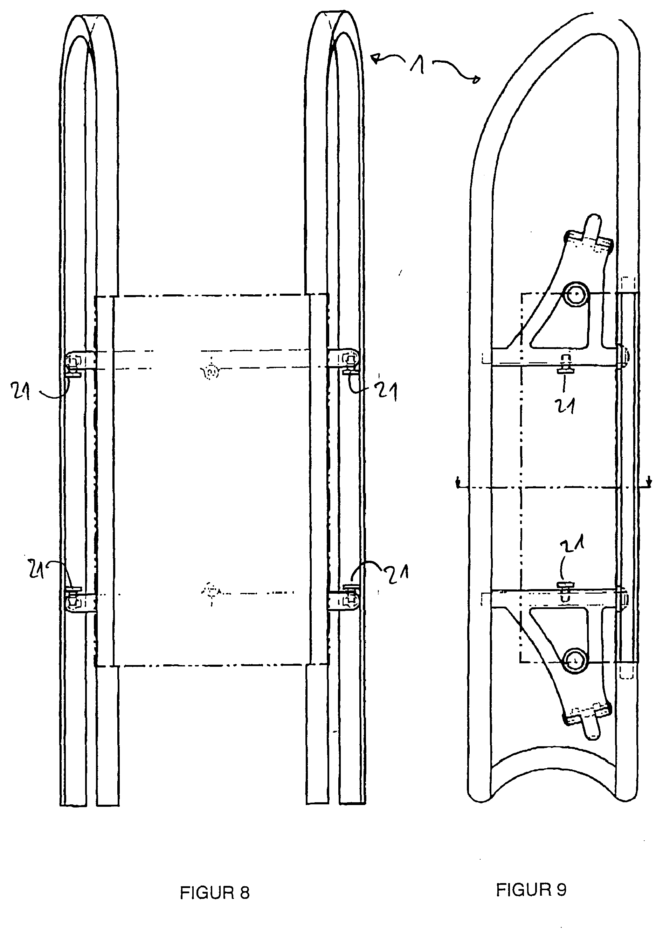

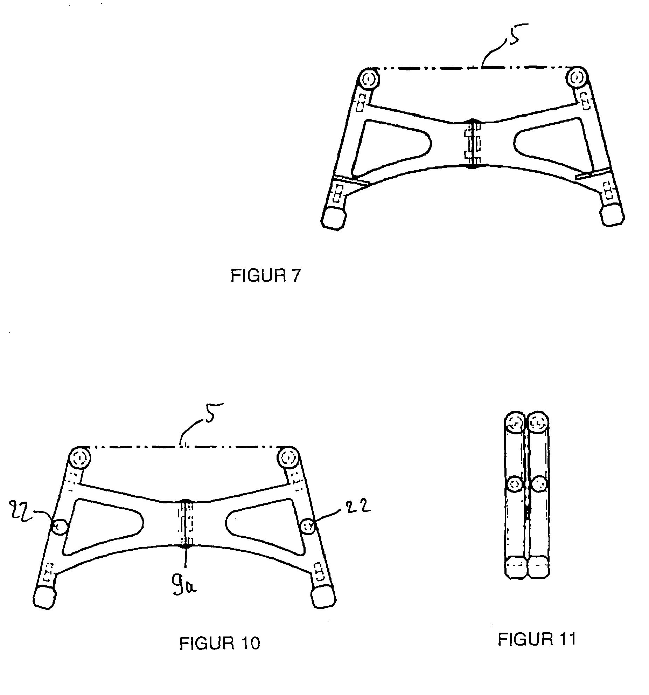

In einer Alternative der vorliegenden Erfindung kann bei dem Klappschlitten 1 mit den eingangs genannten Merkmalen die Drehlage mindestens einer der Drehachsen 7, 8 , vorzugsweise beider Drehachsen mindestens einer Querstrebe, noch weiter bevorzugt beider Drehachsen 7, 8 beider Querstreben 6, durch mindestens eine Arretiervorrichtung 20, 21, 22, 23, 24 kraftschlüssig arretiert sein. Eine solche kraftschlüssige Arretierung kann durch zahlreiche, dem Fachmann für derartige Arretierzwecke geläufige Arretiervorrichtungen bewirkt werden. Nicht beschränkende Beispiele hierfür sind Griffschrauben oder Klemmschrauben (siehe "20" in Figur 1), Arretiergriffe, Spanngriffe, Einrastbolzen, Schnellspanner usw.. Beispielhaft zeigen die Figuren 8 bis 10 Schlitze bzw. Nute, in die ein Zapfen oder Bolzen eingreift, so daß eine Bewegung um die Achse um mehr als 90 ° nicht möglich ist, weil der Zapfen bzw. Bolzen dies verhindert. Solche Bolzen können beispielsweise als Einrast-Bolzen, Griffschraube, Klemmschraube oder Arretiergriff ausgestaltet sein.

Derartige Arretiervorrichtungen 20, 21, 22, 23, 24 können einzeln oder können zu mehreren vorgesehen werden. Weiter ist es erfindungsgemäß bevorzugt möglich, daß eine oder mehrere derartige Arretiervorrichtung(en) anstelle mindestens eines Anschlags, wie er oben beschrieben wurde, zur Stabilisierung des erfindungsgemäßen Klappschlittens 1 eingesetzt wird, oder daß eine oder mehrere derartige Arretiervorrichtung(en) zusammen mit mindestens einem Anschlag 10, 11, 12, 13, 14 zur Begrenzung der Drehlage mindestens einer der Drehachsen der Querstrebe(n) verwendet werden. Erfindungsgemäß besonders bevorzugt ist die Verwendung sowohl mindestens eines Anschlags zusammen mit mindestens einer Arretiervorrichtung zur Stabilisierung des Klappschlittens 1.

Durch die erfindungsgemäßen Anschläge an den seitlichen Enden der Querstreben oder den Teilen, beispielsweise Stützen, der Schlittenrahmen bzw. den Anschlägen direkt an den Drehachsen 7, 8 oder Lagern der Drehachsen und/oder die Arretierungen zur Begrenzung der Drehlage(n) einer oder beider, vorzugsweise beider Drehachsen 7, 8 mindestens einer Querstrebe 6, vorzugsweise beider Querstreben 6, wird bei den in der Ebene eines jeden Schlittenrahmens 4 parallel oder in einem Winkel zueinander angeordneten Drehachsen 7, 8 wirksam verhindert, daß die beiden Schlittenrahmen 4 relativ zueinander in Längsrichtung des Klappschlittens verschoben werden können.

In einer weiteren, erfindungsgemäß bevorzugten Ausführungsform kann eine zusätzliche Stabilisierung der Schlitten-Konstruktion dadurch erreicht werden, daß zusätzlich eine oder mehrere Arretiervorrichtung(en) 40, 41 an einer oder beiden der Querstreben-Scharnierachsen 9a vorgesehen werden. Die Kombination dieser bekannten Art der Stabilisierung mit den stabilisierenden Einrichtungen gemäß der vorliegenden Erfindung, insbesondere den Begrenzungen der Drehlage(n) mindestens einer der seitlichen Drehachsen 7, 8, vorzugsweise aller Drehachsen 7, 8, des Klappschlittens 1 führt zu außergewöhnlich stabilen Klappschlitten-Konstruktionen gemäß der Erfindung.

Der Sitz 5 des erfindungsgemäßen Klappschlittens 1 kann ein beliebiger, für diese Zwecke aus dem Stand der Technik bekannter Klappschlitten-Sitz sein. Infrage kommen Sitze aus Tuch (beispielsweise Segeltuch), aus Gurten, aus Holz, aus Kunststoff usw., um nur einige beispielhaft zu nennen. Gemäß einer weiteren, aufgrund guter Stabilität ebenfalls bevorzugten Ausführungsform wird ein Klappschlitten 1 vorgesehen, in dem der Sitz 5 als mindestens zwei starre Sitzteile 5a, 5b umfassendes Scharnier ausgebildet ist, wobei die jeweiligen äußeren Längsseiten des auf jeder Seite jeweils am nächsten zu den Sitzleisten 3, 3 angeordneten Sitzteils 5a, 5b parallel zu den Sitzleisten 3, 3 schwenkbar und in Längsrichtung nicht verschiebbar an den jeweiligen Sitzleisten 3, 3 angebracht sind und die inneren Längsseiten der mindestens zwei starren Sitzteile 5a, 5b über mindestens eine parallel zu den Sitzleisten 3, 3 orientierte und in Längsrichtung nicht verschiebbare Scharnierachse 5c miteinander verbunden sind.

Klappschlitten der vorstehend geschilderten Art zeichnen sich durch eine hohe Stabilität im aufgeklappten Zustand aus. Selbst deutliche Erschütterungen des Schlittens, beispielsweise durch Bodenunebenheiten, bei schneller Fahrt oder bei erheblicher Belastung des Schlittens, ergeben keine Destabilisierung durch Längsverschiebungen der Schlittenrahmen relativ zueinander.

Erfindungsgemäß sind in einer bevorzugten Ausführungsform an mindestens einer der Querstreben 6 Mittel zur Arretierung des Drehzustandes mindestens einer der Scharnierachsen 9a vorgesehen. Für den Klappschlitten gemäß der Erfindung ist es bevorzugt, wenn an beiden Querstreben 6 Mittel zur Arretierung beider Scharnierachsen 9a vorgesehen sind.

Besonders bevorzugt ist eine Ausführungsform des erfindungsgemäßen Klappschlittens 1, bei der die Querstreben-Hälften 6a, 6b in ihrem mittleren Bereich Anlageflächen aufweisen, die eine Drehung der Scharniere um die Scharnierachse 9a über den im aufgeklappten Zustand des Schlittens im wesentlichen gestreckten Zustand der Querstreben 6 hinaus verhindern. Dadurch wird die Stabilität des erfindungsgemäßen Klappschlittens 1 weiter erhöht.

In einer alternativen und ebenfalls bevorzugten Ausführungsform umfassen die Querstreben 6 in ihrem mittleren Bereich eine Kombination aus einem Zapfen auf einer der Querstreben-Hälften 6a mit einer die Scharnierachse 9a einschließenden Abdeckung mit einer mit dem Außenumfang der Abdeckung konzentrischen Öffnung auf der anderen der Querstreben-Hälften 6b. Der auf der einen QuerstrebenHälfte 6a befestigte Zapfen greift derart in die Öffnung der auf der anderen Querstreben-Hälfte 6b befestigten Abdeckung ein, daß er im vollständig zusammengeklappten und im vollständig aufgeklappten Zustand der Schlittens 1 an den jeweiligen Enden der Öffnung anliegt. Damit verhindert er eine Drehung der Scharniere um die Scharnierachse über den im aufgeklappten Zustand des Schlittens im wesentlichen gestreckten Zustand der Querstreben hinaus. Auch auf diesem Weg kann in zuverlässiger Weise die Drehlage der Scharnierachsen 9a im aufgeklappten Zustand des Klappschlittens 1 begrenzt werden und kann damit dem Schlitten zusätzlich Stabilität verliehen werden.

Zur Erhöhung der Stabilität und Belastbarkeit des Schlittens ist in einer weiteren bevorzugten Ausführungsform vorgesehen, dass die Querstreben 6 im aufgeklappten Zustand dem Sitz 5 unterstützend anliegen. Alternativ ist es auch möglich, daß die Querstreben dem Sitz 5 mittels eines oder mehrerer Abstandshalter beabstandet unterstützend anliegen. Solche Abstandshalter können in einer weiteren bevozugten Ausführungsform der Erfindung aus einem elastischen Material (wie beispielsweise Gummi, Kunststoff) bestehen und damit eine gewisse Elastizität aufweisen. Sie können alternativ an den Querstreben (-Hälften) 6a, 6b oder an der Unterseite des Sitzes 5 oder auch sowohl an den Querstreben-Hälften 6a, 6b als auch am Sitz 5 befestigt sein.

Dabei kann es einer weiteren Erhöhung der Stabilität des Schlittens dienen und deswegen besonders bevorzugt sein, mindestens eine, weiter bevorzugt beide Querstreben 6 im aufgeklappten Zustand des Schlittens 1 kraftschlüssig, aber lösbar mit dem Sitz 5 zu verbinden. So läßt sich der Drehzustand der Scharnierachsen 9a der Querstreben 6 und des Sitzes 5 im aufgeklappten Zustand des Schlittens 1 in einfacher Weise stabilisierend arretieren.

Um im zusammengeklappten Zustand einen möglichst geringen Platzbedarf für den Schlitten zu benötigen, ist vorgesehen, dass im zusammengeklappten Zustand die Sitzteile 5a, 5b zwischen den Teilen der Querstreben 6 und Sitzleisten 4 liegen. Dies läßt sich in einfacher Weise dadurch realisieren, daß die beiden Teile der Querstreben 6 bei ihrer parallelen Ausrichtung, d. h. im zusammengeklappten Zustand, einen gegenseitigen Abstand aufweisen. Dies ist möglich beispielsweise aufgrund der Lage der Scharnierachse 9a außerhalb der Ebene, die durch die der Querstrebe 6 zugehörigen seitlichen Drehachsen 7, 8 definiert ist.

Es ist jedoch auch möglich, bei dem erfindungsgemäßen Klappschlitten 1 eine Anordnung vorzusehen, bei der die Scharnierachse 9a der Querstrebe 6 auf der Ebene liegt, die durch die der Querstrebe 6 zugehörigen seitlichen Drehachsen 7, 8 definiert ist. Dies ist dadurch möglich, daß die jeweilige Querstrebe 6 als "Doppelscharnier" ausgebildet ist, also zwei Scharnierachsen aufweist, über die die beiden jeweiligen Querstreben-Hälften auf der nicht den jeweiligen linken und rechten Drehachsen zugewandten Seiten verbunden sind. Bei Ausbildung der Querstreben als Doppelscharnier liegt ein stabiler Klappschlitten auch dann vor, wenn die Scharnierachsen auf der Ebene liegen, die durch die der jeweiligen Querstrebe zugehörigen seitlichen Drehachsen definiert ist.

Eine andere Möglichkeit, einen im Gebrauch stabilen, jedoch bei Lagerung und Transport platzsparenden Klappschlitten zu realisieren, besteht darin, in der Mitte des Sitzes 5 mindestens zwei Scharnierachsen vorzusehen, die durch mindestens ein vorzugsweise (aber nicht notwendig) starres (zusätzliches) Sitzteil 5d verbunden sind.

Die Erfindung wurde vorstehend unter Bezugnahme auf ihre bevorzugten Ausführungsformen beispielhaft beschrieben, ist jedoch nicht auf die beschriebenen Ausführungsformen beschränkt.

## Patentansprüche

1. Klappschlitten (1) mit zwei seitlichen, jeweils eine Kufe (2), eine Sitzleiste (3) und gegebenenfalls eine oder mehrere Stütze(n) (4a) umfassenden Schlittenrahmen (4), die durch einen Sitz (5) und zwei Querstreben (6) miteinander verbunden sind, wobei die beiden Querstreben (6) als Scharnier ausgebildet sind und in ihrer Mitte mindestens eine Scharnierachse (9a) aufweisen, deren Drehlage(n) im aufgeklappten Zustand des Schlittens (1) arretierbar ist/sind und wobei die Querstreben (6) an ihren seitlichen Enden um je eine rechte Drehachse (7) und je eine linke Drehachse (8) drehbar mit den Schlittenrahmen (4) verbunden sind, wobei die einer Querstrebe (6) zugehörige rechte Drehachse (7) und linke Drehachse (8) in einer Ebene liegen und die Scharnierachse(n) (9a) in einer gleichen Ebene vor, auf oder hinter der erstgenannten Ebene liegt/liegen, wobei im aufgeklappten Zustand des Schlittens (1) die Drehlage mindestens einer der Drehachsen (7, 8) jeder Querstrebe (6) durch mindestens einen Anschlag (10, 11, 12, 13, 14) an den seitlichen Enden mindestens einer der Querstreben (6) oder an mindestens einem der Schlittenrahmen (4) oder an mindestens einer der Drehachsen (7, 8) oder an einem Lager mindestens einer der Drehachsen (7, 8) begrenzt ist und/oder die Drehlage mindestens einer der Drehachsen (7, 8) jeder Querstrebe (6) durch mindestens eine Arretiervorrichtung (20, 21, 22, 23, ...) kraftschlüssig arretiert ist.

2. Klappschlitten (1) nach Anspruch 1, wobei die Drehlagen beider Drehachsen (7, 8) mindestens einer, vorzugsweise beider Querstreben (6) durch Anschläge (10, 11, 12, 13, 14) an den seitlichen Enden der Querstrebe(n) (6) begrenzt sind und/oder die Drehlagen beider Drehachsen (7, 8) durch Anschläge (10, 11, 12, 13, 14) an beiden Schlittenrahmen (4) begrenzt sind.

3. Klappschlitten (1) nach Anspruch 1, wobei die Drehlagen beider Drehachsen (7, 8) an beiden Drehachsen (7, 8) jeder Querstrebe (6) oder an den Lagern der Drehachsen (7, 8) jeder Querstrebe (6) begrenzt sind.

4. Klappschlitten (1) nach einem der Ansprüche 1 bis 3, wobei die Anschläge (10, 11, 12, 13 ...) gegenseitige Anlageflächen (10) zweier im Rahmen des Aufklappvorgangs des Schlittens (1) zur Anlage kommender benachbarter Flächen umfassen und/oder wobei die Anschläge (10, 11, 12, 13 ...) Anschlags-Einrichtungen (11, 12, 13 ...) an fixierten Teilen des Klappschlittens (1) zur Anlage beweglicher Teile des Klappschlittens (1) umfassen.

5. Klappschlitten (1) nach einem der Ansprüche 1 bis 4, umfassend versetzt angeordnete Anschlagseinrichtungen (12, 13) zum Verhindern der gegenseitigen Behinderung beim Zusammenklappen oder Öffnen des Klappschlittens (1).

6. Klappschlitten nach einem der Ansprüche 1 bis 5, umfassend zusätzlich eine oder mehrere Arretiervorrichtung(en) (40, 41, ...) an einer oder beiden der Querstreben-Scharnierachsen (9a).

7. Klappschlitten (1) nach einem der Ansprüche 1 bis 6, umfassend eine oder mehrere Arretiervorrichtung(en) (30, 31, 32, 33, ...) im Bereich der Querstreben-Drehachsen (7, 8) anstelle mindestens eines Anschlags (10, 11, 12, 13, ...).

8. Klappschlitten (1) nach einem der Ansprüche 1 bis 6, umfassend eine oder mehrere Arretiervorrichtung(en) (30, 31, 32, 33, ...) im Bereich der Querstreben-Drehachsen (7, 8) zusammen mit mindestens einem Anschlag (10, 11, 12, 13, ...).

9. Klappschlitten (1) nach einem der Ansprüche 1 bis 8, worin zusätzlich der Sitz (5) als mindestens zwei starre Sitzteile (5a, 5b) umfassendes Scharnier ausgebildet ist, wobei die jeweiligen äußeren Längsseiten des auf jeder Seite jeweils am nächsten zu den Sitzleisten (3, 3) angeordneten Sitzteils (5a, 5b) parallel zu den Sitzleisten (3, 3) schwenkbar und in Längsrichtung nicht verschiebbar an den jeweiligen Sitzleisten (3, 3) angebracht sind und die inneren Längsseiten der mindestens zwei starren Sitzteile (5a, 5b) über mindestens eine parallel zu den Sitzleisten (3, 3) orientierte und in Längsrichtung nicht verschiebbare Scharnierachse (5c) miteinander verbunden sind.
